# EUROPÄISCHE PATENTANMELDUNG

(11) **EP 0 644 119 A1**
(43) Veröffentlichungstag der Anmeldung: **22.03.1995**
(21) Anmeldenummer: 94113932.1
(22) Anmeldetag: 06.09.1994
(51) Int. Cl.: B65B 23/14, B65B 35/50

(54) **Verfahren und Vorrichtung zur Bildung von Stapeln von Warenstücken, insbesondere keksen**

(30) Priorität: 08.09.1993 DE 4330427
(71) Anmelder: Klöckner Hänsel GmbH, D-30163 Hannover (DE)
(72) Erfinder: Hogenkamp, Willie, 30161 Hannover (DE)
(74) Vertreter: Rehberg, Elmar, Dipl.-Ing.

(57) **Zusammenfassung**

Bei einem Verfahren zur Bildung von Stapeln von flachliegenden Warenstücken, insbesondere Keksen, aus in einer Förderrichtung 14 geförderten Reihen werden die Warenstücke 2 einzeln abständig gefördert und kommen ohne Endlosstapelung erst im Stapel mit festgelegter Anzahl miteinander in Kontakt. Die Warenstücke 2 werden während ihrer Förderung auf Abstand gezählt, entsprechend der vorbestimmten Anzahl im Stapel je in einen Reihenstapel 22, 23 aus abständig hintereinander geförderten Warenstücken 2 separiert, und die Warenstücke jedes geförderten Reihenstapels werden in einem Magazin 25, 26 flachliegend übereinander in Förderrichtung 14 aufgesammelt.

## Beschreibung

Die Erfindung bezieht sich auf ein Verfahren zur Bildung von Stapeln von flachen Warenstücken, insbesondere Keksen, aus in einer Förderrichtung geforderten Reihen, bei dem die Warenstücke einzeln abständig gefördert und ohne Endlosstapelung erst im Stapel mit festgelegter Anzahl miteinander in Kontakt kommen. Die Erfindung Zeigt auch eine Vorrichtung zur Durchführung des Verfahrens mit einem Förderer für die Reihen der Warenstücke in Förderrichtung sowie Magazinen zur Aufnahme je eines Stapels von Warenstücken. Die Erfindung läßt sich für Kekse, Bisquits, Waffeln u. dgl. anwenden, die in nebeneinander angeordneten Reihen aus einem Backofen auslaufen. Diese Endlosreihen müssen letztendlich in Stapel mit einer festgelegten Anzahl von Warenstücken überführt und die Stapel dann verpackt werden. Während dieser Behandlung sollen die bruchempfindlichen Warenstücke möglichst schonend behandelt werden.

Ein Verfahren und eine Vorrichtung der eingangs beschriebenen Art sind aus der EP 0 453 407 A1 und der EP 0 526 403 A1 bekannt. Die in Form eines Teppichs, also in Form einer Gruppe oder eines ununterbrochenen Teppichs mit allseitigem gegenseitigen Abstand aus einem Backofen auf einen Förderer austretenden Warenstücke werden reihenweise behandelt, und zwar entweder als Längs- oder als Querreihen. Bei einer Querreihenbildung müssen diese Querreihen in den meisten Fällen erst ausgerichtet werden, wodurch eine erste Beanspruchung der Warenstücke entsteht. Auf diese Weise gebildete Endlosreihen werden gefördert, und mittels eines Fühlers wird die relative Lage jedes Warenstückes auf dem Förderer erfaßt und gespeichert. Stromabwärts des Fühlers werden die Warenstücke in mehreren aufeinanderfolgenden Stationen einzeln erfaßt und in Magazine oder Gruppenbildungskammern aufgesammelt, bis dort die festgelegte Anzahl erreicht ist. Dabei nimmt zwangläufig die Menge der den Teppich bildenden Warenstücke ab und die Menge der in den Gruppenbildungskammern enthaltenen Warenstücke zu. Die Warenstücke werden mit Greifern oder Saugern erfaßt und zu mehreren gleichzeitig entweder in Magazine oder auf einen Austragsförderer überführt. Dabei ändert sich die Förderrichtung der Warenstücke; hierdurch ist die Leistung einer solchen Vorrichtung beschränkt. Vorteilhaft werden die Warenstücke jedoch einzeln behandelt, und es findet keine Endlosstapelung statt, aus der heraus die Stapel mit festgelegter Anzahl separiert werden müßten. Nachteilig ist, daß eine Aussonderung defekter Warenstücke nicht stattfindet. Auch diese werden von den Saugern oder Greifern erfaßt und in die Magazine abgelegt. Wie die Weiterverarbeitung der in den Magazinen gebildeten Stapel von Warenstücken erfolgt, insbesondere die Verpackung der Stapel, bleibt offen.

Bei Verfahren und Vorrichtungen, die mit einer Endlosstapelung arbeiten, werden die Warenstücke meist unter Zuhilfenahme einer Vibratorrinne gegen einen Anschlag gefördert und dabei in eine Stellung aufgerichtet, in der die flachen Warenstücke stehend hintereinander in gegenseitigem Kontakt sind. Aus diesem Endlosstapel müssen dann Stapel mit festgelegter Anzahl separiert werden. Hierzu werden messer- oder lanzenartige Elemente eingesetzt, die an vorbestimmter Stelle mehr oder weniger genau in den Endlosstapel eingreifen. Die Beschädigungsgefahr der Warenstücke ist bei solchen Verfahren besonders groß, weil die Warenstücke während ihrer Förderung über sehr lange Zeit miteinander in Kontakt sind, so daß sich, insbesondere auf der Vibratorrinne, ein Abrieb einstellt. Auch bei der Stapelbildung besteht Bruchgefahr. Es besteht dann keine Möglichkeit mehr, defekte Warenstücke aus einem bereits gebildeten Stapel zu entfernen.

Der Erfindung liegt die Aufgabe zugrunde, ein Verfahren und eine Vorrichtung der eingangs beschriebenen Art bereitzustellen, mit denen es möglich ist, die Warenstücke unter Vermeidung eines Endlosstapels möglichst lange einzeln zu behandeln, so daß die Bruchgefahr minimiert ist, und Stapel zu bilden, die keine defekten Warenstücke aufweisen. Dabei müssen die einzelnen Behandlungsschritte bis hin zur Verpackung der Stapel so aufeinander abgestimmt sein, daß das Verfahren und die Vorrichtung mit hoher Leistung betrieben werden können.

Erfindungsgemäß wird dies bei dem Verfahren der eingangs beschriebenen Art dadurch erreicht, daß die Warenstücke während ihrer Förderung auf Abstand gezählt, entsprechend der vorherbestimmten Anzahl im Stapel je in einen Reihenstapel aus abständig hintereinander geförderten Warenstücken separiert und die Warenstücke jedes geförderten Reihenstapels in einem Magazin flachliegend übereinander in Förderrichtung aufgesammelt werden.

Die Erfindung geht von dem Gedanken aus, die Stapelbildung zu einem vergleichsweise früheren Zeitpunkt der Förderung durchzuführen. Die Stapel aus festgelegter Anzahl Warenstücken sollen nicht erst in Gruppenbildungskammern oder Magazinen gebildet werden, sondern bereits dann, wenn sich die Warenstücke noch in der abständigen Förderung flachliegend hintereinander in der Reihe befinden. So werden die Warenstücke in der abständigen Förderung in der Reihe auf ihren ordnungsgemäßen Zustand kontrolliert und defekte Warenstücke ausgeschieden, und zwar ohne daß ein Warenstück mit dem anderen in Kontakt kommt. Die ordnungsgemäßen Warenstücke werden während ihrer Förderung gezählt, und es werden Reihenstapel gebildet, die jeweils die festgelegte Anzahl von Warenstücken aufweisen. Diese Reihenstapel werden voneinander separiert, indem die Reihenstapel entweder in einen Querabstand zueinander gebracht werden oder an unterschiedlichen Stellen je in ein Magazin übergeben werden, was auch in Längsrichtung geschehen kann. Während des gesamten Separierungsvorganges befinden sich die Warenstücke noch in Einzelbehandlung, d. h. sie kommen miteinander nicht in Kontakt. Damit sind jegliche Beschädigungsmöglichkeiten, die mit der Separierung im Endlosstapel, wie es im Stand der Technik durchgeführt wird, beseitigt. Durch die Reihenstapelbildung während der abständigen Förderung besteht in einfacher Weise die Möglichkeit, defekte Warenstücke auszusondern und Reihenstapel zu bilden, die die festgelegte Anzahl von Warenstücken aufweisen, wobei der Abstand der Warenstücke in Förderrichtung hintereinander nicht unbedingt gleich sein muß. An der Stelle, an der ein defektes Warenstück ausgesondert wurde, befindet sich z. B. eine größere Lücke, was jedoch für den Reihenstapel unschädlich ist, da er ohnehin seine Beendigung erst mit dem Erreichen der festgelegten Anzahl ordnungsgemäßer Warenstücke findet. Die so zusammengestellten und einzeln geförderten Warenstücke im Reihenstapel werden dann lediglich noch mit einem Magazin flachliegend übereinander in Förderrichtung aufgesammelt. Die Warenstücke kommen erst im letzten Moment miteinander in Kontakt. Durch die flachliegende Aufnahme übereinander - etwa im Gegensatz zu einer Stehend- Hochkant-Aufsammlung - ist die Beschädigungsgefahr im Magazin erheblich verringert. Es entstehen vorteilhaft kurze Wege von der Aufsammlung im Stapel im Magazin bis zu einer nachgeschalteten Verpackungsstation, so daß der verpackte Stapel in der Regel keine defekten Warenstücke enthält. Das Verfahren kann mit relativ hoher Leistung angewendet werden, also beispielsweise auch für Warenstücke, bei denen in jeder der nebeneinander aus dem Backofen austretenden Reihen etwa 200 Warenstücke pro Längsreihe und Minute anfallen, die behandelt werden müssen. Das Aufsammeln der Warenstücke im Magazin kann aus einer Fördergeschwindigkeit der Reihenstapel in der Größenordnung von 60 m/min heraus erfolgen. Vorteilhaft ist weiterhin, daß in sehr einfacher Weise Stapel mit einer anderen festgelegten Anzahl von Warenstücken gebildet werden können. Hierzu ist es lediglich erforderlich, die Zähleinrichtung und wenige andere nachgeschaltete Aggregate anders einzustellen.

Die Reihenstapel können abwechselnd in einen Abstand quer zu ihrer Förderrichtung gebracht werden und abwechselnd in je einem Magazin gesammelt werden. Dabei sind jeder Reihe, aus der Reihenstapel gebildet werden, zwei Magazine zugeordnet, in denen abwechselnd je ein vollständiger Stapel aufgesammelt wird. Es werden also - bezogen auf die Reihe - die Warenstücke nicht gleichzeitig in mehreren Stapeln abgelegt, wie dies im Stand der Technik bekannt ist, sondern es wird - pro Reihe - gleichzeitig immer nur ein Stapel behandelt, wobei dieser Stapel abwechselnd in das eine und das andere Magazin abgelegt wird. Damit entsteht vorteilhaft die Möglichkeit einer Leistungssteigerung, weil für die Handhabung der Magazine und die nachfolgende Verpackung der Stapel ein Takt entsteht, dessen Zeit ausreicht, um die Weiterbehandlungsschritte durchführen zu können. Es versteht sich, daß ein aus dem Backofen austretender Teppich von Warenstücken in eine Mehrzahl von Reihen aufgeteilt wird, wobei dies in Längsrichtung oder auch in Querrichtung geschehen kann. Erst in der Reihe findet die Überprüfung der Warenstücke unter Aussonderung defekter Warenstücke statt. Unmittelbar danach schließt sich die Reihenstapelbildung an. Die Warenstücke im Reihenstapel werden einzeln behandelt. Auch die aufgesammelten Stapel werden einzeln behandelt.

Dabei können die abwechselnd aufgesammelten Stapel zur abwechselnden Weiterverarbeitung, insbesondere Verpackung, in die gleiche Position gefördert werden. Der in dieser Position sich ergebende Takt, also das Zeitintervall für die Weiterverarbeitung, insbesondere Verpackung, ergibt sich aus der Fördergeschwindigkeit im Reihenstapel entsprechend der Anzahl festgelegter Warenstücke im Stapel. Diese Zeitdauer ist wesentlich größer als die Zeit zwischen zwei aufeinander folgenden Warenstücken in der Reihe.

Wenn nur ordnungsgemäße Warenstücke produziert werden, entfällt die Aussonderung defekter Warenstücke. In der Regel ist es jedoch erforderlich, die Warenstücke einzeln vor Eintritt in den Reihenstapel zu überprüfen und defekte Warenstücke auszusondern. Dies geschieht unmittelbar vor bzw. während der Reihenstapelbildung, so daß nur Reihenstapel aus ordnungsgemäßen Warenstücken entstehen und gebildet werden.

Die Warenstücke können quer zur Förderrichtung aus dem Backofen abgezogen und in dieser Richtung die Reihenstapel gebildet werden. Hierzu ist eine vorangehende Querausrichtung der Warenstücke erforderlich, falls die Warenstücke aus dem Backofen nicht ohnehin in ausgerichteten Querreihen austreten. Der Abzug quer zu dieser Förderrichtung ist vorteilhaft, weil der Bräunungsgrad der Warenstücke im Backofen in den einzelnen austretenden Längsreihen unterschiedlich sein kann und durch den Querabzug Warenstücke unterschiedlichen Bräunungsgrades in einen Stapel gelangen, so daß die gebildeten Stapel etwa ein identisches Aussehen aufweisen und helle und dunkle Stapel vermieden werden. Außerdem bietet dieser Querabzug vorteilhaft die Möglichkeit, die insgesamt aus dem Backofen austretenden Warenstücke auch bei hoher Leistung des Backofens auf relativ kurzer Strecke weiterzubehandeln und zu verpacken. Der Übertritt von einem Förderer auf den anderen beim Querabzug verkürzt die Förderstrecke in Förderrichtung und schafft vorteilhaft die Möglichkeit, schmale Austragsbänder nebeneinander vorzusehen. An jedem Austragsband werden abwechselnd zwei Reihenstapel gebildet, und die Stapel werden dann in der gleichen Position abwechselnd fertig verpackt. Damit entfällt eine gemeinsame Hochleistungsverpackungsmaschine mit ihrer Anfälligkeit, und es entstehen kleine, preisgünstig herstellbare und überschaubare Verpackungseinheiten an jedem Austragsband, mit deren Hilfe es möglich ist, auch unterschiedliche Stapel zu verpacken. Ein Formatwechsel, also die Umstellung von z. B. 20 auf 25 Keksen im Stapel, ist leicht möglich.

Die Vorrichtung zur Durchführung des Verfahrens kennzeichnet sich erfindungsgemäß dadurch, daß einzelne Förderer mit zugeordneter Zähleinrichtung zur Bildung von Reihenstapel vorgesehen sind, die eine Weiche zur Trennung der Reihenstapel voneinander aufweisen, und daß jedem einzelnen Förderer zwei abwechselnd mit je einem Reihenstapel zu beschickende Magazine zugeordnet sind.

Je ein einzelner Förderer ist zur Verarbeitung je einer Reihe von Warenstücken bestimmt. Aus dieser Reihe von Warenstücken werden im Bereich jedes einzelnen Förderers Reihenstapel gebildet. Hierzu ist eine Weiche erforderlich, um die Reihenstapel voneinander zu trennen. Diese Trennung erfolgt jedoch so, daß jeweils komplette Stapel hintereinander gebildet werden. Der erste Reihenstapel wird in das eine Magazin abgelegt, wobei die Warenstücke hintereinander dort aufgesammelt werden. Erst danach wird der zweite Reihenstapel, der auf dem einzelnen Förderer nachfolgt, in dem anderen Magazin aufgesammelt, während das erste Magazin während dieser Aufsammlung des zweiten Reihenstapels im zweiten Magazin weiterverarbeitet, insbesondere fertigverpackt, wird. Es versteht sich, daß für den Teppich der aus dem Backofen austretenden Warenstücke eine Mehrzahl von einzelnen Förderern vorgesehen sind, wobei jeder einzelne Förderer mindestens zwei nachgeschaltete Magazine besitzt.

Die Ausbildung der einzelnen Förderer kann auf verschiedene Weise erfolgen. So ist es beispielsweise möglich, daß der einzelne Förderer als Verteilertisch und insbesondere auch zur Aussonderung von defekten Warenstücken ausgebildet ist. Solche Verteilertische sind an sich bekannt. Sie bestehen aus einem Förderband entsprechender Breite und einem Weichenorgan, welches oberhalb dieses Verteilertisches arbeitet. Die in einer Reihe hintereinander auf dem Verteilertisch ankommenden Warenstücke werden mit der Verteilerweiche in drei unterschiedliche Querpositionen zueinander verbracht, wobei einerseits die beiden Reihenstapel gebildet werden und andererseits defekte Warenstücke ausgeschleust werden können. Am Ende des Verteilertischen werden die Warenstücke einzeln übergeben, und zwar in drei unterschiedlichen Übergabestellen, wobei jedoch die Besonderheit auftritt, daß gleichzeitig immer nur ein Warenstück übergeben wird.

Eine weitere Möglichkeit besteht darin, daß der einzelne Förderer als vertikal arbeitende Weiche ausgebildet ist, die drei in der Höhe gegeneinander versetzte Übergabestellen aufweisen, von denen zwei Übergabestellen zur Separierung und Bildung der Reihenstapel und die dritte Übergabestelle zur Aussonderung defekter Warenstücke dienen. Die weitere Förderung und das Aufsammeln der so gebildeten Reihenstapel in den einander zugeordneten Magazinen kann mit unterschiedlich ausgebildeten Einzelelementen erfolgen. In der Regel werden sich an die Übergabestellen einzelne Förderbänder anschließen, von denen zwei jeweils zu einem Magazin führen, während das dritte Förderband die defekten Warenstücke in einen Sammelbehälter o. dgl. überführt. Die Magazine können dabei quer zur Förderrichtung des einzelnen Förderers mit der vertikal arbeitenden Weiche angeordnet sein. Auch eine Anordnung in Längsrichtung mit entsprechendem Versatz ist möglich.

In allen Fällen ist zwischen den beiden Magazinen eine Mittelstation vorgesehen, in die die beiden Magazine abwechselnd überführbar sind und in der ein Verpackungsaggregat beginnt, das zum abwechselnden Fertigverpacken der Stapel aus den beiden Magazinen ausgebildet ist. Damit werden die beiden aufgesammelten Stapel jeweils abwechselnd nacheinander der von beiden Magazinen aus bedienten Mittelstation zugeführt, so daß beginnend mit dieser Mittelstation das Verpackungsaggregat nur als einzelnes Aggregat ausgebildet sein muß, welches trotzdem in der Lage ist, die Stapel aus zwei Magazinen nacheinander aufzunehmen und zu verarbeiten. Damit entsteht ein relativ einfach ausgebildetes Verpackungsaggregat. Die Anzahl der Verpackungsaggregate insgesamt stimmt freilich mit der Anzahl der einzelnen Förderer überein. Auf diese Weise können die Verpackungsaggregate parallel zueinander arbeiten. Es ist nicht erforderlich, eine Hochleistungsverpackungsmaschine einzusetzen, sondern die Verpackungsaggregate können durchaus mit normaler Verpackungsgeschwindigkeit arbeiten, was den Verpackungsvorgang erleichert. Auch ein Formatwechsel ist auf diese Weise einfach möglich. Es müssen nur vergleichsweise wenig Teile an den einzelnen Verpackungsaggregaten auf ein neues Format eingestellt werden. Dies kann innerhalb einer Anlage auch schrittweise durchgeführt werden, so daß die kontinuierliche Auslieferung der gebackenen Warenstücke aus dem Backofen während eines Formatwechsels nicht unterbrochen werden muß.

Die Erfindung wird anhand bevorzugter Ausführungsbeispiele weiter erläutert und beschrieben. Es zeigen:
Figur 1 eine Übersichtsskizze in Draufsicht auf einen aus einem Backofen austretenden Teppich von Warenstücken mit der Darstellung einer einzelnen Vorrichtung zur Bildung von Stapeln,
Figur 2 eine perspektivische Darstellung wesentlicher Geschehensabläufe an einer einzelnen Vorrichtung,
Figur 3 eine Draufsicht auf das Übergabeende der Vorrichtung gemäß Figur 2 mit Andeutung eines Verpackungsaggregates,
Figur 4 eine Stirnansicht im Übergangsbereich der Vorrichtung gemäß Figur 2 gemäß der Linie IV-IV in Figur 3,
Figur 5 eine Seitenansicht von Teilen der Vorrichtung gemäß den Figuren 2 bis 4,
Figur 6 eine ähnliche Darstellung wie Figur 3 nach einem weiteren Arbeitsschritt,
Figur 7 eine ähnliche Darstellung wie Figur 4 nach diesem Arbeitsschritt,
Figur 8 eine ähnliche Darstellung wie Figur 3 der Vorrichtung nach einem Formatwechsel,
Figur 9 eine ähnliche Darstellung wie Figur 4 nach dem Formatwechsel,
Figur 10 eine ähnliche Darstellung wie Figur 5 nach dem Formatwechsel,
Figur 11 eine zweite Ausführungsform der Vorrichtung zur Reihenstapelbildung in Seitenansicht,
Figur 12 eine Draufsicht auf die Vorrichtung gemäß Figur 11,
Figur 13 eine dritte Ausführungsform einer Vorrichtung zur Reihenstapelbildung und
Figur 14 eine Draufsicht auf die Vorrichtung gemäß Figur 13.

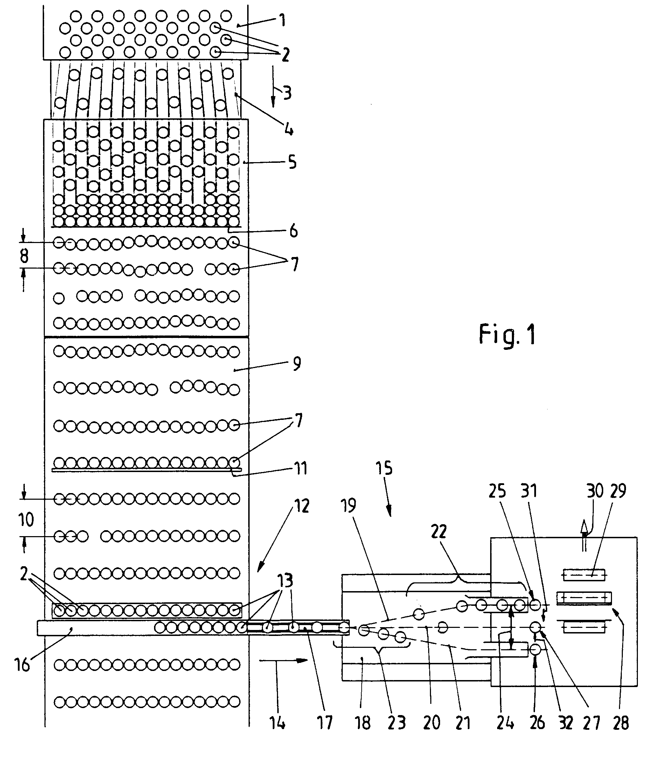

In Figur 1 ist schematisch das Auslaufende eines Backofens 1 angedeutet, aus dem Warenstücke 2 in Längsreihen gemäß Pfeil 3 kontinuierlich auslaufen. Über eine Spreizeinrichtung 4 werden die im Backofen 1 unter seitlicher Überdeckung gebackenen Warenstücke 2 quer zu den Längsreihen gemäß Pfeil 3 so auseinandergeführt, daß sich die Warenstücke 2 auf einem anschließenden Förderer 5 ohne Überdeckung in Querrichtung in Längsreihen befinden bzw. in Längsreihen gefördert werden. Es ist ein Anschlag 6 vorgesehen, der taktweise mit dem Förderer 5 zusammenarbeitet, um je nach dem Füllungsgrad vor dem Anschlag 6 mehr oder weniger vollständige Querreihen 7 von Warenstücken 2 getaktet abzugeben. Die Querreihen 7 können sich durch die Förderung an den einzelnen Warenstücken insbesondere beim Passieren von Übergabestellen zwischen mehreren hintereinandergeschalteten Förderern noch relativ zueinander verschieben, so daß die Warenstücke 2 in jeder Querreihe 7 nicht unbedingt fluchtend senkrecht zu der allgemeinen Förderrichtung gemäß Pfeil 3 abgegeben werden. Dies geschieht insbesondere dann, wenn ein Abstand 8 von Querreihe 7 zu Querreihe 7 auf einem nachgeschalteten Förderer 9, der vergleichsweise schneller umlaufend angetrieben wird, in einen größeren Abstand 10 zwischen den aufeinanderfolgenden Querreihen 7 überführt werden muß. Ein weiterer Anschlag 11 kann der erneuten Querausrichtung der Querreihen 7 dienen, so daß auf dem Förderer 9 nach dem Anschlag 11 quer ausgerichtete Querreihen 7 aus Warenstücken 11 vorliegen. Die bisher beschriebenen Einrichtungen können von Fall zu Fall auch anders angepaßt und vorgesehen sein. Sie können insbesondere auch völlig fehlen, wenn die Warenstücke 2 ohnehin in geordneten und ausgerichteten Querreihen 7, wie sie nach dem Anschlag 11 vorliegen, bereits aus dem Backofen 1 austreten.

An einer Abnahmestelle 12 werden die Querreihen 7 reihenweise abgenommen. Dabei wird aus einer Querreihe 7 eine Reihe 13 von Warenstücken 2. Die bisherige Förderrichtung gemäß Pfeil 3 ändert sich in eine neue Förderrichtung gemäß Pfeil 14, wobei die Richtung des Pfeiles 14 senkrecht auf der Richtung des Pfeiles 3 steht. Auf diese Weise werden die Warenstücke 2 in Querreihen 7 behandelt. Es ist aber ohne weiteres vorstellbar, daß die Warenstücke auch in Längsreihen behandelt werden könnten, also so, daß die nachgeschaltete Vorrichtung 15 zur Bildung von Stapeln von flachen Warenstücken 2 auch solche Längsreihen verarbeiten kann. Dabei zeigen die Pfeile 3 und 14 dann in die gleiche Richtung. Die Erfindung wird jedoch nachfolgend weiter an einer sog. Querabnahme beschrieben, bei der zwischen den Pfeilen 3 und 14 ein Winkel von 90° vorgesehen ist. In beiden Fällen ist eine Mehrzahl von Vorrichtungen 15 nebeneinander vorgesehen, wobei hier aus Übersichtlichkeitsgründen nur eine solche Vorrichtung 15 angedeutet ist.

Die Vorrichtung 15 weist einen ersten Förderer 16 auf, auf den eine Querreihe 13 auf einmal überführt wird. Dem Förderer 16 ist ein zweiter Förderer 17 nachgeschaltet, der mit größerer Oberflächengeschwindigkeit angetrieben wird, so daß die im Bereich der Reihe 13 noch aneinanderliegenden Warenstücke 2 im Bereich des Förderers 17 auf gegenseitigem Abstand gefördert werden und keinerlei Kontakt zueinander aufweisen. Es ist ohne weiteres erkennbar, daß bei Verwendung einer stärker spreizenden Spreizeinrichtung 4 oder für den Fall, daß die Warenstücke 2 bereits auf einem solchen Abstand in Querrichtung aus dem Backofen 1 auslaufen, jedes einzelne Warenstück 2 ohne Kontakt zu seinem Nachbarstück gefördert werden kann, so daß die Bruchgefahr für die Warenstücke 2 wahrend dieser Förderung erheblich reduziert ist. Auf dem Förderer 17 befinden sich jedenfalls die Warenstücke 2 in einer Reihe 13 mit Abstand hintereinander. Die Warenstücke 2 gelangen von dem Förderer 17 auf einen Verteilertisch 18, der an sich auch nur ein etwas breiter gestaltetes Förderband darstellt, mit dem eine Weiche zusammenarbeitet, die die einzelnen Warenstücke in drei unterschiedliche Richtungen gemäß den gestrichelt angedeuteten Linien 19, 20, 21 ablenkt. Eine nicht dargestellte Überwachungseinrichtung, beispielsweise im Bereich des Förderers 17 überwacht und prüft die ankommenden Warenstücke in der Reihe 13 auf Vollständigkeit und Unversehrtheit. Defekte Warenstücke werden von der Weiche des Verteilertisches 18 in Richtung der Linie 20 durchgelassen, also ohne seitliche Richtungsänderung. Ordnungsgemäße Warenstücke 2 werden beispielsweise zunächst in Richtung der Linie 19 von der Weiche des Verteilertisches 18 abgelenkt und dabei gezählt, bis die voreingestellte Anzahl von Warenstücken 2, die gemeinsam als Stapel verpackt werden sollen, erreicht ist. Es wird hier ein erster Reihenstapel 22 aus der festgelegten Anzahl von Warenstücken 2 gebildet, wobei die Besonderheit darin besteht, daß die einzelnen Warenstücke 2 im Reihenstapel 22 noch ohne gegenseitige Berührung hintereinander gefördert werden. Sobald die festgelegte Anzahl der Warenstücke 2 im Reihenstapel 22 erreicht ist, schaltet die Weiche des Verteilertisches 18 in Richtung auf die Linie 21 um, so daß dann bei nachfolgender Förderung ein zweiter Reihenstapel 23 auf dem Verteilertisch 18 gebildet wird. Defekte Warenstücke 2 werden jeweils bei ihrem Auftreten kontinuierlich gemäß der Linie 20 ausgeschleust, wobei dann eine Lücke entsteht, wie es anhand des Reihenstapels 22 dargestellt ist. Selbstverständlich ist die zugehörige Zähleinrichtung so ausgebildet bzw. gesteuert, daß nur korrekte Warenstücke 2 von der Zähleinrichtung erfaßt werden. Es entstehen also nacheinander jeweils abwechselnd Reihenstapel 22 und 23 aus der festgelegten Anzahl von ordnungsgemäßen Warenstücken, ohne daß sich die Warenstücke 2 gegenseitig berühren. In Querrichtung zu der Förderrichtung gemaß Pfeil 14 befinden sich die Reihenstapel 22 und 23 auf einem gegenseitigen Abstand 24, der dem Abstand der Linien 19 und 21 an dieser Stelle entspricht. Es sind hier im Bereich der Vorrichtung 15 zwei Magazine 25 und 26 vorgesehen, wobei das Magazin 25 der Reihe 19 zugeordnet ist und nur Reihenstapel 22 aufnimmt, während das Magazin 26 der Linie 21 zugeordnet ist und damit ausschließlich Reihenstapel 23 aufnimmt. Im Bereich der Magazine 25 und 26 werden jeweils abwechselnd die vorher gebildeten Reihenstapel 22, 23 bei flachliegend übereinander befindlichen Warenstücken 2 aufgesammelt. Die Warenstücke 2 kommen hier erstmals miteinander in Kontakt, und zwar lange nachdem sie gezählt, für ordnungsgemäß befunden und entsprechend der festgelegten Anzahl in den Reihenstapeln 22 und 23 gruppiert worden sind. Es schließt sich dann im Bereich jeder einzelnen Vorrichtung 15 die Verpackung der Stapel an. Zwischen den Magazinen 25 und 26, und zwar zweckmäßig auf halbem Wege, ist eine Mittelstation 27 vorgesehen, in der ein in Figur 1 nur schematisch angedeutetes Verpackungsaggregat 28 beginnt. Die fertig verpackten Stapel 29 werden von der Vorrichtung 15 gemäß Pfeil 30 abgegeben, beispielsweise gesammelt und in einen Umkarton verbracht. Es ist bereits erkennbar, daß der aufgesammelte Reihenstapel 22 im Magazin 25 in Richtung auf die Mittelstation 27 gemäß Pfeil 31 transportiert wird, um dem Verpackungsaggregat 28 zugeführt zu werden. Jeweils abwechselnd geschieht dies auch mit dem im Magazin 26 aufgesammelten Reihenstapel 23, der gemäß Pfeil 32 in die Mittelstation 27 gelangt. Es ist also nur ein Verpackungsaggregat 28 erforderlich, um abwechselnd tätig zu werden und beide Reihenstapel 22 und 23 jeweils abwechselnd nacheinander zu verpacken.

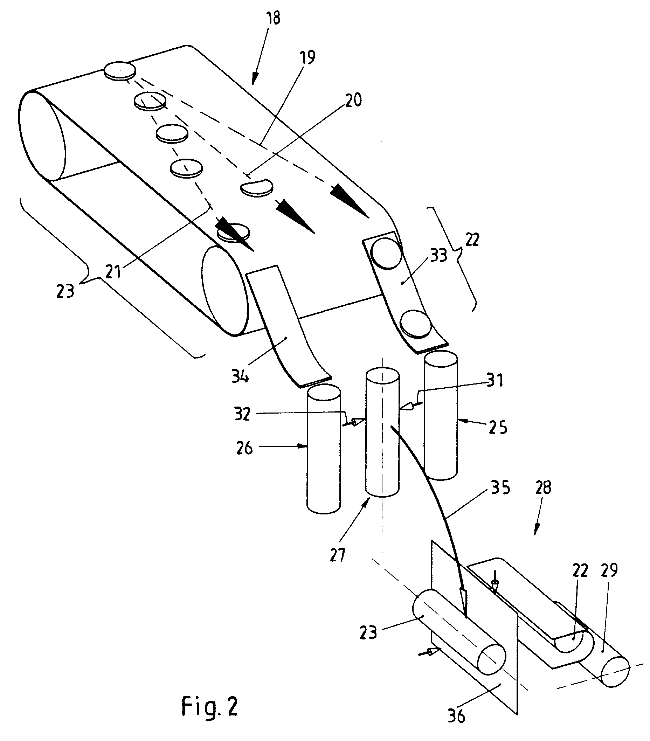

Figur 2 verdeutlicht nochmals den Verteilertisch 18 mit den drei Linien 19, 20, 21. Es ist erkennbar, wie die Linie 20 am Ende des Förderbandes des Verteilertisches 18 endet, so daß hier die defekten Warenstücke herabfallen und gleichzeitig der Zwischenraum zwischen den fortgesetzten Linien 19 und 21 frei für die Anordnung der Mittelstation 27 wird. Über Rutschen 33 und 34 gelangen die Warenstücke bzw. die Reihenstapel 22 und 23 abwechselnd in die Magazine 25 und 26. Aus der Mittelstation 27 wird der aufrechtstehende Stapel um einen Winkel von 90° gemäß Pfeil 35 verschwenkt und gelangt so in eine liegende Position. In einem Hüllblatt 36 erfolgt das Einschlagen bzw. Fertigverpacken im Verpackungsaggregat 28, von dem letztendlich der fertigverpackte Stapel 29 abgegeben wird.

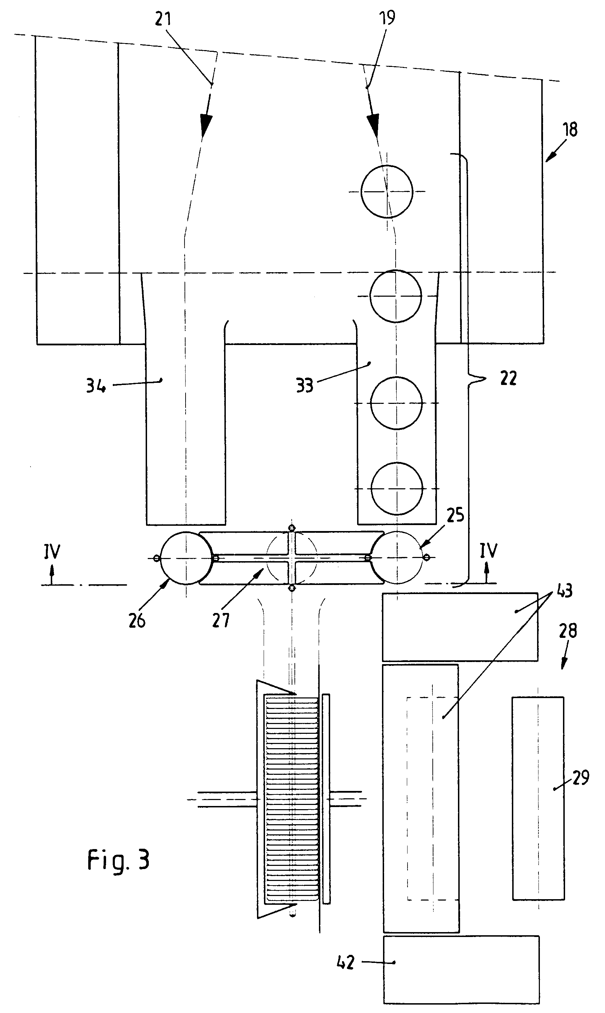

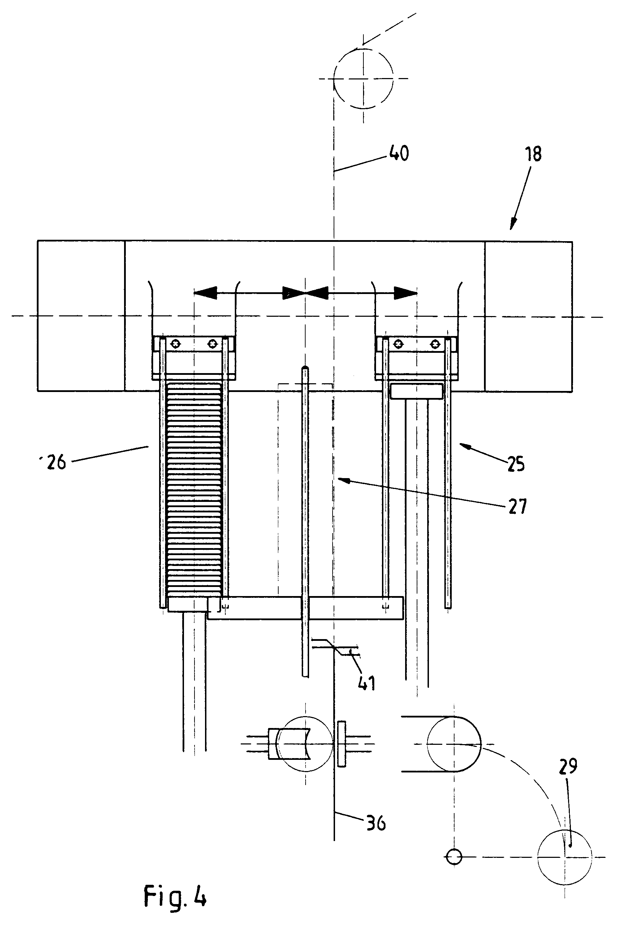

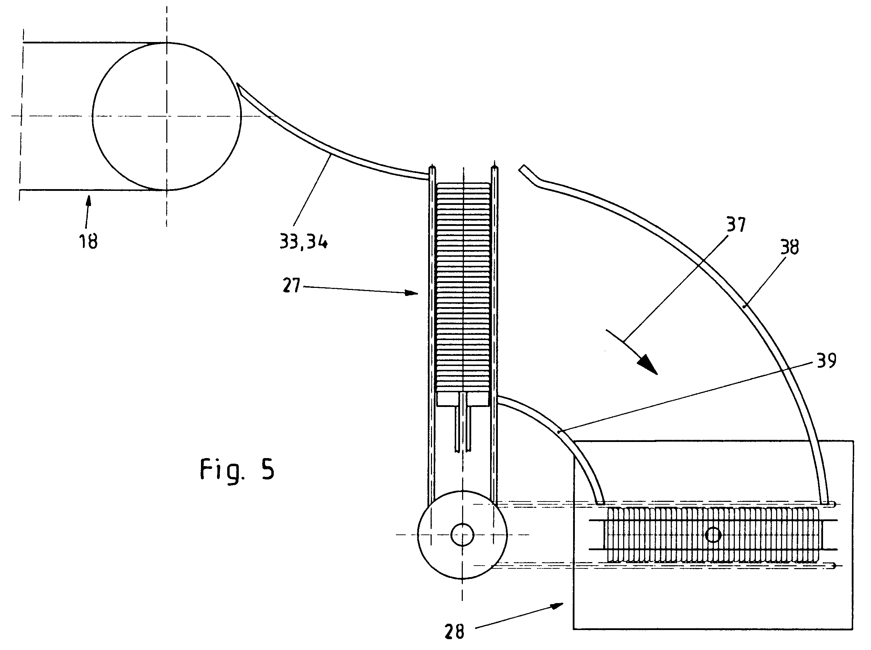

Die Figuren 3, 4 und 5 zeigen zueinandergehörige Zeichnungen von Teilen der Vorrichtung 15 im Endbereich des Verteilertisches 18. Es ist erkennbar, daß eine Situation dargestellt ist, in welcher ein Reihenstapel 23 komplett im Magazin 26 aufgenommen wurde. Nachfolgend wird der Beginn eines Reihenstapels 22 in das Magazin 25 einlaufen. Figur 5 läßt erkennen, wie ein Stapel aus der Mittelstation 27 gemäß Pfeil 37 um etwa 90° aus einer aufrechtstehenden Stellung in eine liegende Stellung überführt wird. Ein festes Führungsteil 38 und ein verstellbares Führungsteil 39 wirken dabei zusammen. Der Abstand zwischen den Führungsteilen 38 und 39 ist verstellbar, und zwar auf die Stapelhöhe, also entsprechend der vorbestellten Anzahl von Warenstücken 2 in jedem Reihenstapel 22, 23 bzw. dann jedem aufgesammelten Stapel. Das Hüllmaterial 40 wird von einer Rolle abgezogen und mit einer Trenneinrichtung 41 in die einzelnen Hüllblätter 36 zerteilt. Im Verpackungsaggregat 28 wirken festangeordnete Falter 42 und entsprechend der Formatgröße verstellbare Falter 43 zusammen, um fertigverpackte Stapel 29 zu erzeugen.

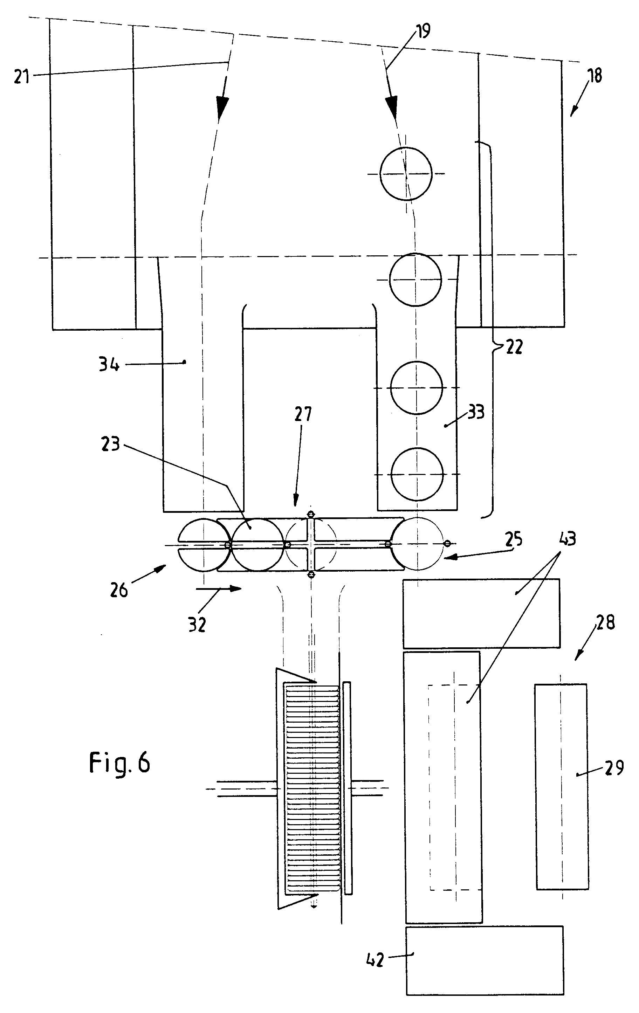

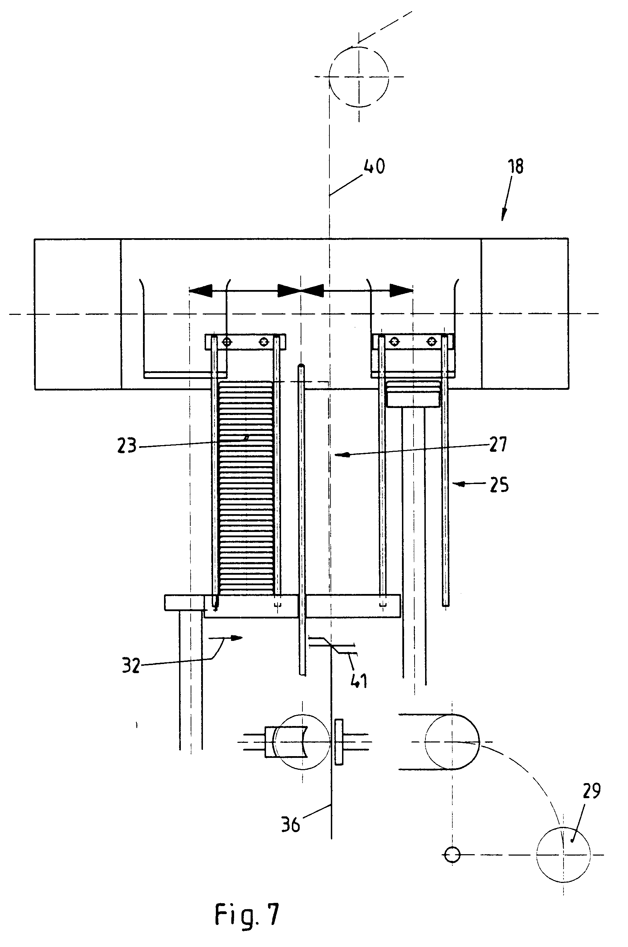

Die Figuren 6 und 7 zeigen Zwischenstellungen, gemäß welchen ein aufgesammelter Reihenstapel 23 gerade gemäß Pfeil 32 aus dem Magazin 26 in Richtung auf die Mittelstation 27 überführt wird. Es versteht sich, daß dies taktweise abwechselnd bezüglich des Reihenstapels 23 aus dem Magazin 26 und bezüglich des Reihenstapels 22 aus dem Magazin 25 heraus geschieht. Während der Reihenstapel 23 in die Mittelstation 27 überführt und sodann gemaß Pfeil 35 in die liegende Stellung überführt wird und anschließend in dem Verpackungsaggregat 28 fertigverpackt wird, wird der nachfolgende Reihenstapel 22 in dem Magazin 25 aufgesammelt und so fort. Zu den Figuren 6 und 7 gehört als Seitenansicht dann wiederum eine Darstellung, wie es bereits Figur 5 zeigt.

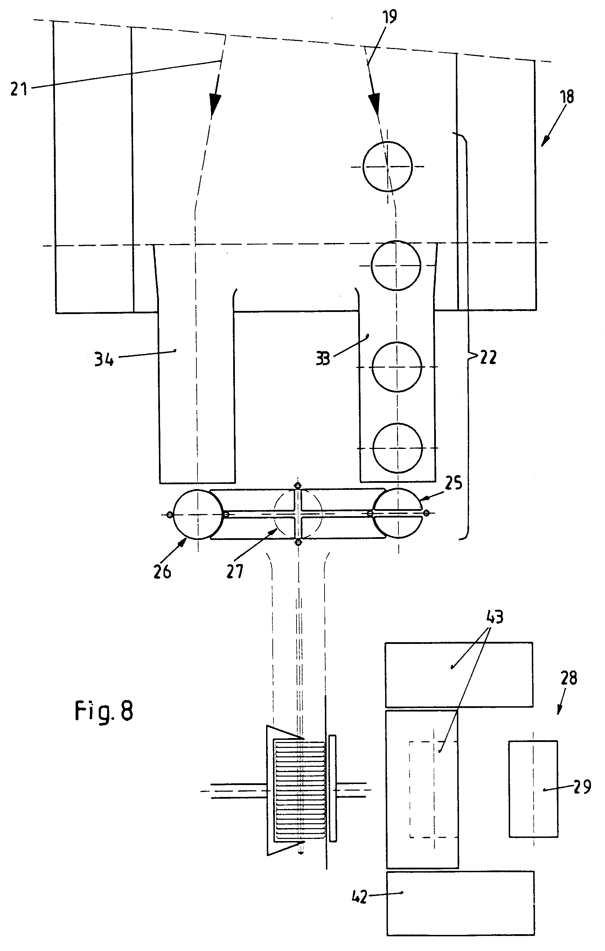

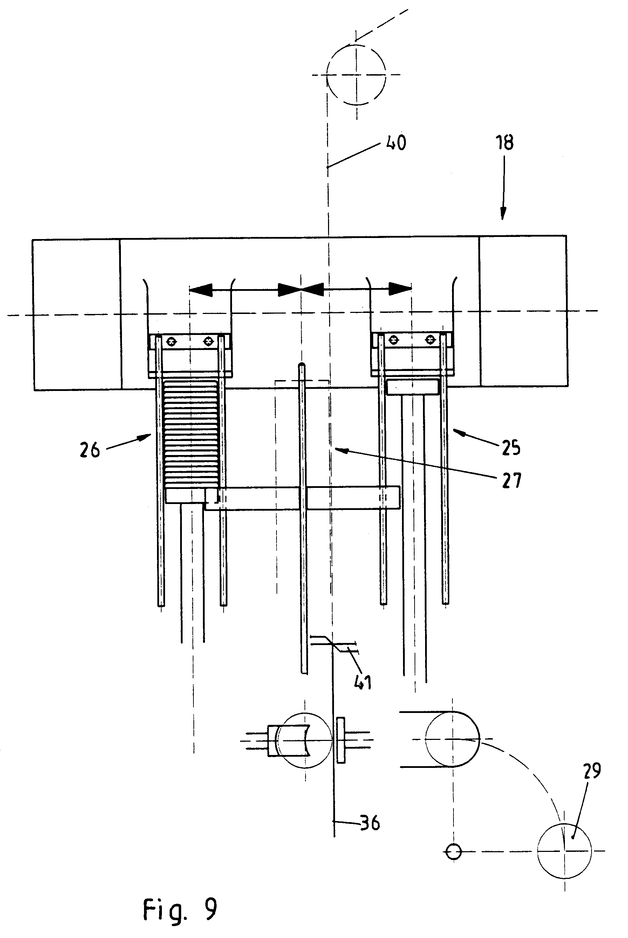

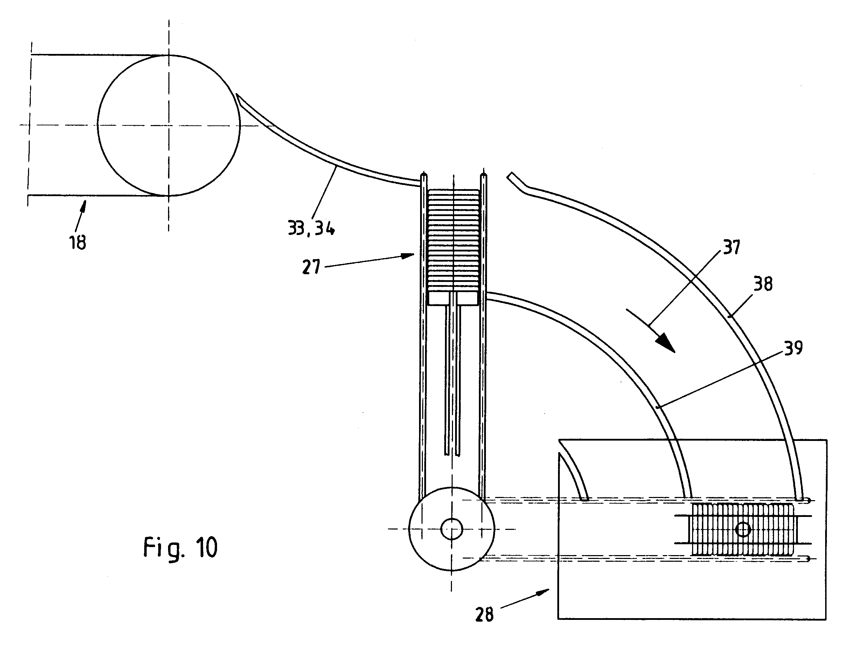

In den Figuren 8 bis 10 sind die gleichen Verhältnisse wie in den Figuren 3 bis 5 dargestellt, jedoch umgestellt auf ein kleineres Format, also eine geringere Anzahl von Warenstücken 2 in den Reihenstapeln 22 bzw. 23. Wie man erkennt, ist der bewegliche Führungsteil 39 und die verstellbaren Falter 43 anders eingestellt, so daß vergleichsweise kürzere Stapel 29 entstehen.

Man erkennt aus der Zusammenschau der Figuren 1 bis 10, daß die einzelnen Vorrichtungen 15, die zu mehreren längs eines aus einem Backofen 1 austretenden Teppichs von Warenstücken 2 angeordnet sind, problemlos auf ein anderes Format umstellbar sind. Dies kann ohne weiteres schrittweise und ohne Produktionsunterbrechung erfolgen. Beispielsweise wird eine als Reservemaschine dienende Vorrichtung 15, die nicht in Funktion ist, auf das neue Format umgestellt, während die anderen Vorrichtungen 15 das alte Format weiterhin verpacken. Sobald die umgestellte Vorrichtung 15 in Betrieb genommen ist, wird eine weitere Vorrichtung 15 außer Funktion gesetzt und auf das neue Format umgestellt, während die übrigen Vorrichtungen 15 weiterarbeiten. So kann ohne Produktionsunterbrechung auf ein anderes Format umgestellt werden.

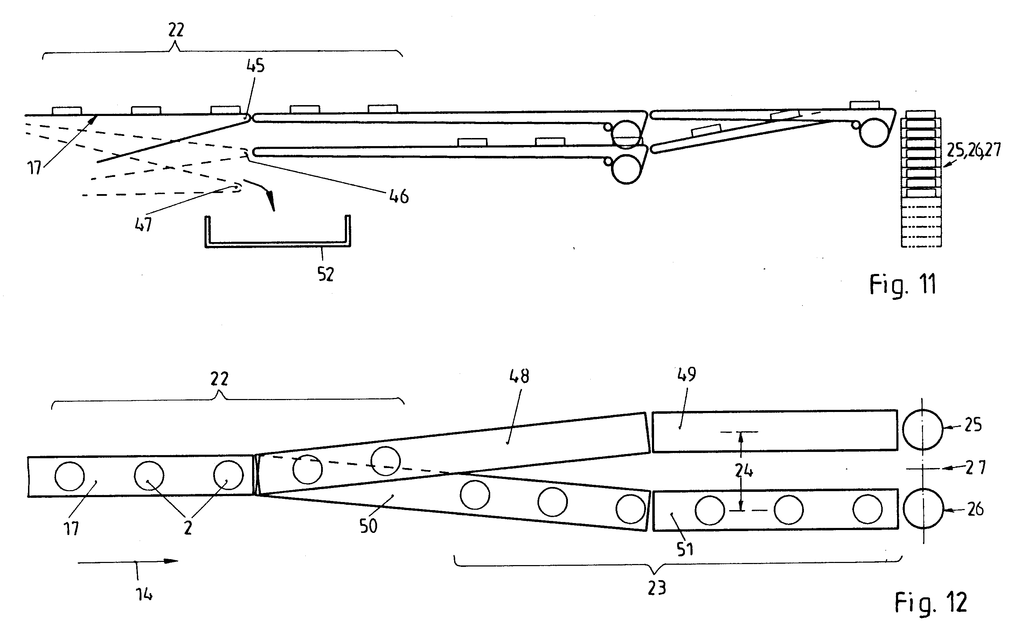

In den Figuren 11 und 12 ist eine zweite Realisierungsmöglichkeit für die Bildung von Reihenstapel 22 und 23 aufgezeigt, die voneinander einen Abstand 24 aufweisen. Der einzelne Förderer 17 ist hier als vertikal arbeitende Weiche 44 ausgebildet, die drei in der Höhe gegeneinander versetzte Übergabestellen 45, 46, 47 aufweist. In der Übergabestelle 45, also der obersten Position, hat der Förderer 17 Anschluß an zwei nachgeschaltete Förderer 48 und 49, die zu dem Magazin 25 führen. In der Übergabestelle 46 besteht Verbindung zu den nachgeschalteten Förderern 50 und 51, die zum Magazin 26 führen. In der Übergabestelle 47 schließlich werden defekte Warenstücke in einen Behälter 52 abgeworfen. Figur 12 läßt erkennen, daß die Mittelstation 27 wiederum zwischen den beiden Magazinen 25 und 26 auf halber Entfernung angeordnet ist. Es versteht sich, daß auch hier wiederum ein Verpackungsaggregat nachgeschaltet ist, wie es anhand des Verpackungsaggregates 28 der vorangehenden Figuren bereits beschrieben wurde.

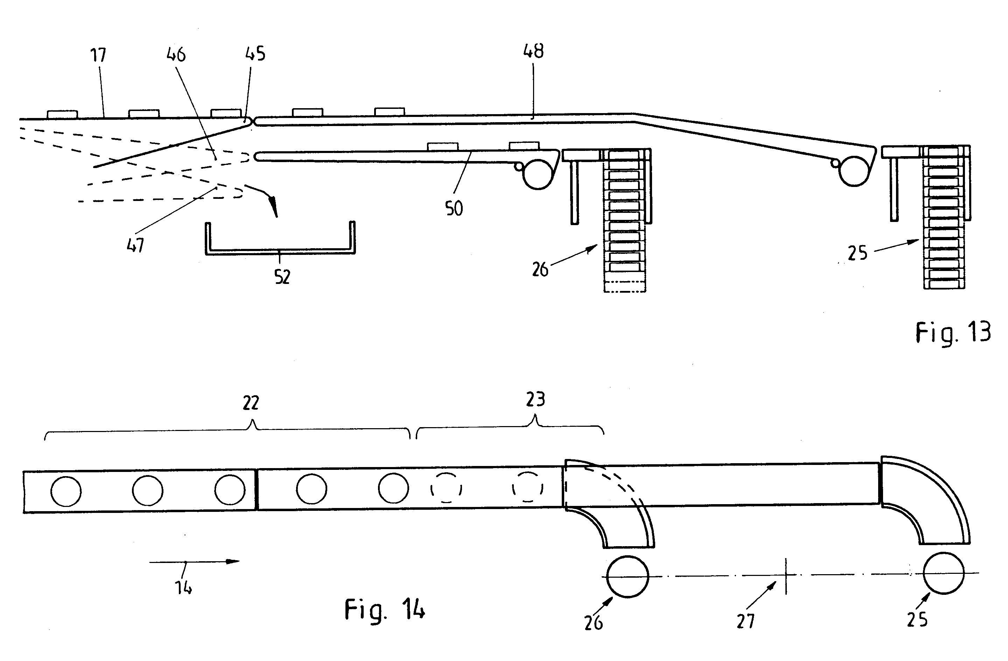

In den Figuren 13 und 14 ist eine weitere Ausführungsmöglichkeit zur Separierung der Reihenstapel 22 und 23 dargestellt. Die beiden dem Förderer 17 nachgeschalteten Förderer 48 und 50 führen zu dem Magazin 25 bzw. 26. Die Förderer 48 und 50 sind übereinander angeordnet, so daß sich kein seitlicher Abstand 24 ergibt. Anders gesagt, befinden sich die Magazine 25 und 26 hier in Förderrichtung gemäß Pfeil 14 versetzt zueinander. Auf halbem Abstand ist auch hier die Mittelstation 27 vorgesehen, an die sich entsprechend ein Verpackungsaggregat 28, wie bereits beschrieben, anschließt. Auch hier führt die dritte Übergabestelle 47 zu einem Behälter 52 für die Aufnahme von defekten Warenstücken 2.

### BEZUGSZEICHENLISTE

- 1: - Backofen
- 2: - Warenstück
- 3: - Pfeil
- 4: - Spreizeinrichtung
- 5: - Förderer
- 6: - Anschlag
- 7: - Querreihe
- 8: - Abstand
- 9: - Förderer
- 10: - Abstand
- 11: - Anschlag
- 12: - Abnahmestelle
- 13: - Reihe
- 14: - Pfeil
- 15: - Vorrichtung
- 16: - Förderer
- 17: - Förderer
- 18: - Verteilertisch
- 19: - Linie
- 20: - Linie
- 21: - Linie
- 22: - Reihenstapel
- 23: - Reihenstapel
- 24: - Abstand
- 25: - Magazin
- 26: - Magazin
- 27: - Mittelstation
- 28: - Verpackungsaggregat
- 29: - Stapel
- 30: - Pfeil
- 31: - Pfeil
- 32: - Pfeil
- 33: - Rutsche
- 34: - Rutsche
- 35: - Pfeil
- 36: - Hüllblatt
- 37: - Pfeil
- 38: - Führungsteil
- 39: - Führungsteil
- 40: - Hüllmaterial
- 41: - Trenneinrichtung
- 42: - Falter
- 43: - Falter
- 44: - Weiche
- 45: - Übergabestelle
- 46: - Übergabestelle
- 47: - Übergabestelle
- 48: - Förderer
- 49: - Förderer
- 50: - Förderer
- 51: - Förderer
- 52: - Behälter

## Patentansprüche

1. Verfahren zur Bildung von Stapeln von flachen Warenstücken, insbesondere Keksen, aus in einer Förderrichtung (14) geförderten Reihen (13), bei dem die Warenstücke (2) einzeln abständig gefördert und ohne Endlosstapelung erst im Stapel mit festgelegter Anzahl miteinander in Kontakt kommen, dadurch gekennzeichnet, daß die Warenstücke (2) während ihrer Förderung auf Abstand gezählt, entsprechend der vorherbestimmten Anzahl im Stapel je in einen Reihenstapel (22, 23) aus abständig hintereinander geförderten Warenstücken (2) separiert und die Warenstücke jedes geförderten Reihenstapels (22, 23) in einem Magazin (25, 26) flachliegend übereinander in Förderrichtung (14) aufgesammelt werden.

2. Verfahren nach Anspruch 1, dadurch gekennzeichnet, daß die Reihenstapel (22, 23) abwechseld in einen Abstand (26) quer zu ihrer Förderrichtung (14) gebracht werden und abwechselnd in je einem Magazin (25, 26) gesammelt werden.

3. Verfahren nach Anspruch 1 oder 2, dadurch gekennzeichnet, daß die abwechselnd aufgesammelten Stapel zur abwechselnden Weiterverarbeitung, insbesondere Verpackung, in die gleiche Position (Mittelstation 27) gefördert werden.

4. Verfahren nach einem der Ansprüche 1 bis 3, dadurch gekennzeichnet, daß die Warenstücke (2) einzeln vor Eintritt in den Reihenstapel (22, 23) überprüft und defekte Warenstücke (2) ausgesondert werden.

5. Verfahren nach einem der Ansprüche 1 bis 4, dadurch gekennzeichnet, daß die Warenstücke (2) quer zur Förderrichtung (3) abgezogen und in dieser Richtung (14) die Reihenstapel (22, 23) gebildet werden.

6. Verfahren nach Anspruch 3, dadurch gekennzeichnet, daß die Stapel in der gleichen Position abwechselnd fertigverpackt werden.

7. Vorrichtung zur Durchführung des Verfahrens nach den Ansprüchen 1 bis 6, mit einem Förderer (16, 17) für die Reihen (13) der Warenstücke (2) in Förderrichtung (14) sowie Magazinen (25, 26) zur Aufnahme je eines Stapels von Warenstücken, dadurch gekennzeichnet, daß einzelne Förderer (16, 17, 18) mit zugeordneter Zähleinrichtung zur Bildung von Reihenstapel (22, 23) vorgesehen sind, die eine Weiche zur Trennung der Reihenstapel (22, 23) voneinander aufweisen, und daß jedem einzelnen Förderer (18) zwei abwechselnd mit je einem Reihenstapel (22, 23) zu beschickende Magazine (25, 26) zugeordnet sind.

8. Vorrichtung nach Anspruch 7, dadurch gekennzeichnet, daß der einzelne Förderer als Verteilertisch (18) und insbesondere auch zur Aussonderung von defekten Warenstücken (2) ausgebildet ist.

9. Vorrichtung nach Anspruch 7, dadurch gekennzeichnet, daß der einzelne Förderer (17) als vertikal arbeitende Weiche (44) ausgebildet ist, die drei in der Höhe gegeneinander versetzte Übergabestellen (45, 46, 47) aufweist, von denen zwei Übergabestellen (45, 46) zur Separierung und Bildung der Reihenstapel (22, 23) und die dritte Übergabestelle (47) zur Aussonderung defekter Warenstücke (2) dienen.

10. Vorrichtung nach Anspruch 7, dadurch gekennzeichnet, daß zwischen den beiden Magazinen (25, 26) eine Mittelstation (27) vorgesehen ist, in die die beiden Magazine (22, 23) abwechselnd überführbar sind und in der ein Verpackungsaggregat (28) beginnt, das zum abwechselnden Fertigverpacken der Stapel aus den beiden Magazinen (25, 26) ausgebildet ist.
